Europäisches Patentamt

European Patent Office

Office européen des brevets

(19)

(11)     EP 0 635 977 B1

(12)                    **EUROPEAN PATENT SPECIFICATION**

(45) Date of publication and mention
     of the grant of the patent:
     **16.08.2001   Bulletin 2001/33**

(51) Int Cl.$^7$: **H04N 7/00**, H04N 5/04,
     H04N 11/00

(21) Application number: **94111982.8**

(22) Date of filing: **17.01.1991**

(54) **High definition television coder/decoder synchronisation**

Synchronisierung von HDTV-Kodierern/Dekodierern

Synchronisation de codeur/décodeur de télévision à haute définition

(84) Designated Contracting States:
     **AT BE CH DE DK ES FR GB GR IT LI LU NL SE**

(30) Priority:  **19.01.1990  GB 9001296**

(43) Date of publication of application:
     **25.01.1995   Bulletin 1995/04**

(62) Document number(s) of the earlier application(s) in
     accordance with Art. 76 EPC:
     **91902131.1 / 0 464 166**

(73) Proprietor: **BRITISH BROADCASTING
     CORPORATION**
     **London W1A 1AA (GB)**

(72) Inventors:
     • **Knee, Michael James**
       **Guildford GU1 1EP, Surrey (GB)**
     • **Wells, Nicholas Dominic**
       **Brighton BN2 2AB, Sussex (GB)**

(74) Representative: **Garratt, Peter Douglas et al**
     **Mathys & Squire**
     **100 Grays Inn Road**
     **London WC1X 8AL (GB)**

(56) References cited:
     **EP-A- 0 322 955          US-A- 4 424 532**
     **US-A- 4 675 722**

**Description**

This invention relates to high definition television (HDTV) and in particular to the synchronisation of receiver and transmitter decoders and coders.

There has been proposed an HDTV coder/decoder (usually referred to as a codec) which consists of six parallel conventional definition (CDTV) bit-rate reduction codecs in parallel (i.e. six sub-codecs). Each codec operates on an appropriate block of picture area and the HDTV codec can operate at 140 Mbit/S. Although this proposal is attractive, it has the disadvantage that if it were to be adopted as a standard, any future implementation would have to consist of six parallel codecs. This standard may not be efficient when the speed of single codecs is increased to the point where an HDTV codec could be implemented with fewer parallel paths.

US-A-4 675 722 discloses the synchronisation of a video signal decoder in which during a C-MAC coding process a timing reference signal is inserted in the signal for transmission to the decoder.

A coder/decoder which overcomes the problem is claimed in our co-pending patent application EP 91902131.1 (published as EP-A-0 464 166 on 08 January 1992) to which reference is directed.

According to the present invention there is provided a method of synchronising a video signal decoder having a decoder buffer, comprising the steps of coding a digital video signal for transmission in a coder having a coder buffer, generating an explicit timing reference signal, inserting the timing reference signal into the coded video signal after the coder buffer and prior to transmission, transmitting the video signal including the timing reference signal, receiving the video signal at a receiver, detecting the timing reference signal in the received coded video signal before the decoder buffer, and setting a decoder time base in accordance with the detected reference signal.

The invention also provides a video signal receiver comprising means for receiving a transmitted coded digital video signal including an timing reference signal, a decoder for decoding the coded video signal including a decoder buffer, means for detecting the timing reference signal in the received video signal before the decoder buffer, means for setting the time base of the decoder in accordance with the detected timing reference signal, and means for displaying the decoded video signal.

The invention further provides a receiver wherein the means for detecting the timing reference signal in the received video signal comprises means for stripping a time reference from the video signal before the decoder buffer.

A coder/decoder system and a method of synchronising according to the invention will now be described with reference to the accompanying drawings in which:

Figure 1 illustrates the stripe-by-stripe coding/decoding approach;

Figure 2 shows a block diagram of a sub-decoder illustrating how motion compensation may be achieved; and

Figure 3 shows a block diagram of a sub-decoder showing additional delays required to implement stripe-by-stripe decoding.

For the purposes of the following description, an HDTV coder can be considered to consist of N sub-coders in parallel. Sub-coder i will process stripes i, i + N, i + 2N etc within any given frame; that is, every Nth stripe. The clock rate in each sub-coder is inversely proportional to the total number of sub-coders.

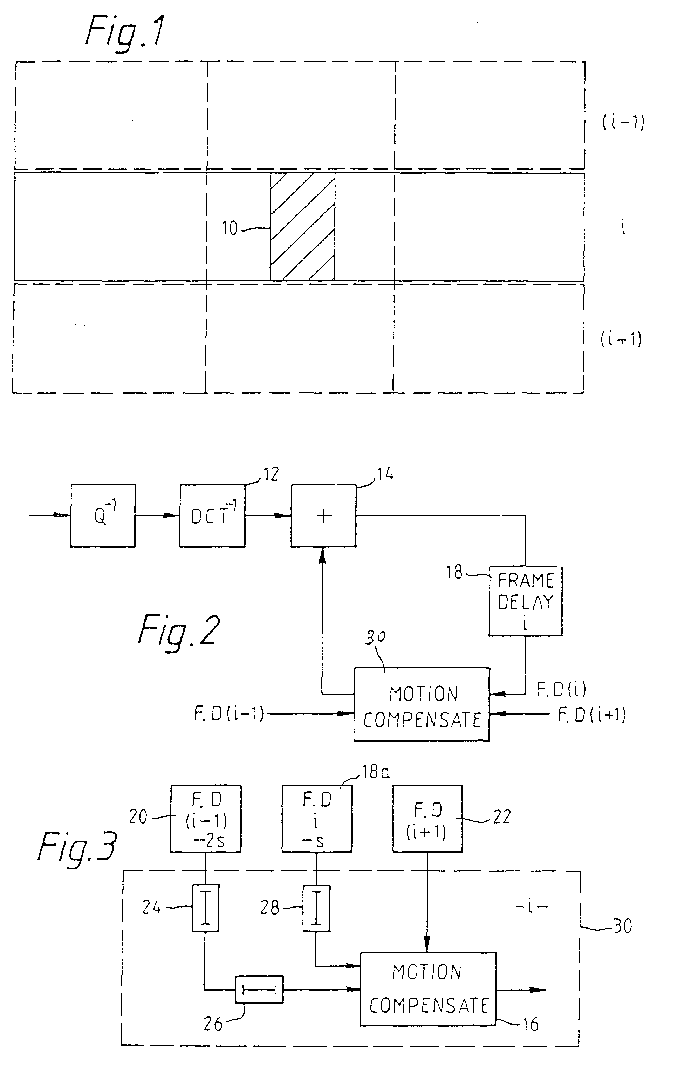

In order that the motion in any given stripe may be measured using block matching techniques, as described for example in our published application GB 2 188 510. The sub-coder for any given strip will be required to have access to adjacent stripe information from the previous frame coded by the previous and subsequent sub-coders (i-1) and (i+1). This is illustrated in figure 1 in which the stripe processed by sub-coder i is shown by a solid line. The current block the motion of which is to be measured is shaded block 10. By determining the position of this block in the previous frame, a motion vector can be assigned to the block and its position estimated for the next frame. A similar operation must be performed by the sub-decoders.

Figures 2 and 3 show how a sub-decoder will use the additional previous frame inputs. The motion estimation function of each sub-coder will similarly require the same three inputs. In figure 2 the demodulated video signal is decoded using a conventional 17/34 Mbit/S hybrid DCT decoder 12 the output of which is supplied to an adder 14. The other input to the adder is the output from the motion compensation unit 16 for stripe i. This compensation unit has supplied to it the data from stripe i of the previous frame which is delayed by frame delay 18 and similarly data from the adjacent stripes (i-1) and i+1), the stripe data being delayed by respective frame delays 20 and 22 as can be seen from figure 3. Sub-decoder i starts to process a stripe at a time which is staggered by a delay of one stripe interval of the input HDTV signal relative to the start of stripe processing of the adjacent sub-decoder i-1. This delay is compensated for as illustrated in figure 3 by stripe delays 24, 26 and 28 which delay the output of the i-1 stripe frame delay to the motion compensation unit of stripe i by two stripe intervals (delays 24 and 26) and the output of the i stripe frame delay by one frame interval (delay 28). It should be noted that the delay imposed by each of the frame delays is equal to one frame period less one stripe interval.

It can be seen from figures 1 to 3 that conventional CDTV codecs can be linked comparatively simply to provide an HDTV codec with full motion compensation and estimation. The only modifications required to the CDTV codec architecture occur in the provision of stripe delays in the motion compensation board illustrated by chain dotted line 30 in figure 3.

The previous discussion has considered problems of motion estimation and compensation in a stripe-by-stripe parallel CDTV codec for HDTV. The remaining description considers coder and decoder buffer architecture and operation and decoder resynchronisation.

## CODER

For maximum commonality with the CDTV codec architecture, each sub-coder has its own sub-buffer. Thus, there will be N sub-buffers and sub-buffer i will contain the information for stripes i, i+N, i+2N and so on.

As the number of sub-coders in parallel may be different from the number of parallel sub-decoders, it is necessary that the transmission multiplex transmits a complete stripe of information from a sub-buffer output before switching to the output of the following sub-buffer. For example, stripe i from sub-buffer i must be fully transmitted before the start of transmission of stripe i+1 from sub-buffer i+1.

The CDTV codecs which form the sub-codecs each have only one coding path and one buffer. The quantisation step for any one stripe is a function of the total sub-buffer occupancy. With a multi sub-buffer architecture, the quantisation steps for a given stripe could be chosen to be a function of the appropriate sub-buffer occupancy or a function of the equivalent total sub-buffer occupancy ETBO where:

$$\text{ETBO} \triangleq \sum_{N} \text{sub-buffer occupancy (i)}$$

The relationship is not exact, for it to be so each sub-coder would have to operate at full speed to complete the coding of one stripe before the following sub-coder commenced the processing of the following stripe.

A better picture quality would be obtained by adapting the quantisation step according to the ETBO. However, this gives rise to problems with individual sub-buffer underflow and overflow. A compromise solution is adopted in which the quantisation step is a function of the individual sub-buffer occupancy and the ETBO.

As well as having to be compatible with a decoder having a different number of sub-decoders, the coder must be compatible with a decoder having a single buffer. In this case, the ETBO has to be less than some specified maximum in order to prevent decoder buffer overflow and underflow.

This requirement is illustrated by the following example. Consider the case in which all the activity in a picture corresponds exactly to only those stripes coded by sub-coder i. In this case the i sub-buffer would be full and the remaining sub-buffers all empty. In such a case, albeit an unlikely one, equivalence to a system with only one coding path and buffer store would oily be achieved if each sub-buffer was as large as the buffer in the single buffer coder. Of course the above example is extreme. The optimum size of the sub-buffer is not as large as that of the single buffer coder and may suffer a small loss of picture quality performance compared with a single-loop coder implementation.

In an alternative embodiment to the multi sub-buffer solution, all sub-coder loops feed into one common buffer store one stripe at a time. However, this embodiment has the disadvantage that the common buffer store would have to accept a data input at a maximum rate of 32 bit words at 144 MHZ clock rate. This embodiment is equivalent to having one coder loop operating at the HDTV clock rate and one coder buffer.

## DECODER

Similarly to the ith sub-coder, in a decoder with N decoder sub-loops or sub-decoder in parallel, stripe i, i+N, i+2N etc. would be directed to sub-buffer i i.e. every Nth stripe is decoded by the same sub-decoder. This necessitates pre-buffer decoding of stripe synchronisation words.

Similarly to the sub-coder, the sub-decoder size can be estimated to be equal to the size of the buffer of a single buffer decoder system. Consider the case of a single loop coder (CDTV), a multi-loop decoder and a quiet picture. The coder has to send stuffing bits periodically. If the stuffing bits all coincided only with those stripes sent to a single sub-decoder, then all the transmitted bit rate would be addressed to a single sub-buffer.

Again, an alternative embodiment has a single decoder buffer followed by N decoder sub-loops. As well as suffering from the disadvantage of high bit rate encountered with the corresponding coder, the buffer output would need to provide 32-bit words at a 144 MHz clock rate, the embodiment has the further disadvantage that post buffer FIFO stores would be required to slow down the data rate for each of the sub-loops.

## DECODER RESYNCHRONISATION

In bit-rate-reduction codecs employing variable bit rate coding for transmission over a fixed bit rate transmission link, it is normal to send the coder buffer occupancy periodically (e.g. every stripe) in order to enable the decoder buffer occupancy to align itself appropriately. Proper alignment of the decoder buffer assures a fixed and known delay through the system.

If the transmission rate is not fixed but varies periodically, the decoder buffer alignment becomes more complicated however it is possible to overcome the problems.

In the coder/decoder described it is not appropriate to send the buffer occupancy for each sub-buffer because a) the number of sub-loops in the coder may be different from the number of loops in the decoder and b) the average transmission rate per channel is highly variable and dependent on the amount of information in each stripe (since the length of time for the transmission of stripe (i) depends on the number of coded bits in this stripe). Also, it is not possible to resynchronise an individual decoder sub-buffer from a total buffer occupancy figure.

The system embodying the invention overcomes these problems by including an explicit timing reference in the transmitted bit stream which by-passes the coder buffer. This may be done in two ways:

Firstly, a flag may be sent within the transmission multiplex frame indicating the start of a TV frame at the coder. The decoder, which knows the normal delay through the codec buffers can then set the decoder time base appropriately. If greater timing accuracy is required, then the transmission multiplex frame may include space for a pointer to indicate in which subsection of the multiplex frame the TV frame start occurred.

Secondly, a timing reference synchronisation word may be stamped into the video multiplex at the output of the coder buffer. This word may or may not be stripped from the video data as required before it enters the decoder buffer and used to set the decoder timebase.

At start up or after loss of synchronisation because of transmission errors, the decoder operates the following procedure:

i) The timing reference at the input to the decoder buffer is detected and the decoder timebase set, giving stripe and field/frame pulses etc;

ii) A stripe is pulled from the first buffer and the stripe number examined;

iii) If this number is lower than required by the timebase further stripes are pulled from the buffers (in sequence) until the stripe number is correct;

iv) If the number is greater than required, decoding of the stripe is delayed until the appropriate time as directed by the timebase;

v) A check is made to ensure that the frame sync pulse timing is correct. (The frame sync pulses is numbered to match the number of the timing reference with the number of the frame synchronising word which is part of the video MUX and which has travelled through the buffer stores).

Decoder resynchronisation is only required if there is a loss of multiplex framing because of transmission errors or because of a non-sync cut in the video source.

The embodiment described provide flexible architecture for an HDTV bit-rate reduction decoder. A coder/decoder may be constructed from any number of parallel sub-coders/decoders so long as the following four conditions are met.

Firstly, the sub-coders/decoders must operate on a stripe-by stripe rather than block-by-block basis;

Secondly, the motion estimation/compensation function of an individual sub-coder/decoder must have access to the information in adjacent stripes;

Thirdly, resynchronisation of the decoder must be achieved independently of the buffer stores, for example by inserting additional timing reference information into the transmitted bit stream; and

Fourthly, the equivalent total buffer occupancy of the coder must be monitored and kept lower than a predefined maximum value. The embodiment described has the advantage that a transmission standard can be defined which allows coders and decoders to be constructed with any number of units in parallel. As the speed of integrated circuits increases it will become possible to build equipment according to the standard using single loop/buffer architectures.

Moreover, the parallel sub-coder/decoder arrangement may be extended to deal with sequentially scanned signals.

## Claims

1. A method of synchronising a video signal decoder having a decoder buffer, comprising the steps of coding a digital video signal for transmission in a coder having a coder buffer, generating a explicit timing reference signal, inserting the timing reference signal into the coded video signal after the coder buffer and prior to transmission, transmitting the video signal including the timing reference signal, receiving the video signal at a receiver, detecting the timing reference signal in the received coded video signal before the decoder buffer, and setting a decoder time base in accordance with the detected timing reference signal.

2. A video signal receiver comprising means for receiving a transmitted coded digital video signal including an explicit timing reference signal, a decoder for decoding the coded video signal including a decoder buffer, means for detecting the timing reference signal in the received video signal before the decoder buffer, means for setting the time base of the decoder in accordance with the detected timing reference signal, and means for displaying the decoded video signal.

3. A receiver according to Claim 2, wherein the means for detecting the timing reference signal in the received video signal comprises means for stripping a time reference from the video signal before the decoder buffer.

4. A video signal transmitter comprising a digital video signal source, a coder for coding the video signal for transmission, the coder including a coder buffer, means for generating an explicit timing reference signal, means for inserting the timing reference signal into the coded video signal at the outset of the coder buffer, and means for transmitting the coded video signal and timing reference signal.

5. A transmitter according to Claim 4, wherein the timing reference signal comprises a flag indicating the start of the video frame.

6. A transmitter according to Claim 4, wherein the means for detecting the timing reference signal comprises a stripe and field/frame synchronisation word.

## Patentansprüche

1. Verfahren zur Synchronisierung eines Videosignaldekodierers, der einen Dekodiererpuffer aufweist, umfassend die Schritte, dass ein digitales Videosignal zum Senden in einem Kodierer, der einen Kodiererpuffer aufweist, kodiert wird, dass ein explizites bzw. direktes Synchronisierungsreferenzsignal erzeugt wird, dass das Synchronisierungsreferenzsignal in das kodierte Videosignal nach dem Kodiererpuffer und vor einem Sendevorgang eingefügt wird, dass das Videosignal einschließlich des Synchronisierungsreferenzsignals gesendet wird, dass das Videosignal bei einem Empfänger empfangen wird, dass das Synchronisierungsreferenzsignal in dem empfangenen, kodierten Videosignal vor dem Dekodiererpuffer detektiert wird und dass eine Dekodiererzeitbasis in Abhängigkeit von dem detektierten Synchronisierungsreferenzsignal eingestellt wird.

2. Videosignalempfänger, umfassend Mittel zum Empfangen eines gesendeten, kodierten, digitalen Videosignals, das ein explizites bzw. direktes Synchronisierungsreferenzsignal umfasst, einen Dekodierer zum Dekodieren des kodierten Videosignals einschließlich eines Dekodiererpuffers, Mittel zum Detektieren des Synchronisierungsreferenzsignals in dem empfangenen Videosignal vor dem Dekodiererpuffer, Mittel zum Einstellen der Zeitbasis des Dekodierers in Abhängigkeit von dem detektierten Synchronisierungsreferenzsignal sowie Mittel zum Anzeigen des dekodierten Videosignals.

3. Empfänger nach Anspruch 2, bei dem das Mittel zum Delektieren des Synchronisierungsreferenzsignals in dem empfangenen Videosignal Mittel zum Abstreifen einer Zeitreferenz von dem Videosignal vor dem Dekodiererpuffer umfasst.

4. Videosignalsender, umfassend eine Quelle für ein digitales Videosignal, einen Kodierer zum Kodieren des Videosignals für einen Sendevorgang, wobei der Kodierer einen Kodiererpuffer bzw. -zwischenspeicher, Mittel zum Erzeugen eines expliziten bzw. direkten Synchronisierungsreferenzsignals, Mittel zum Einfügen des Synchronisierungsreferenzsignals in das kodierte Videosignal zu Beginn des Kodiererpuffers sowie Mittel zum Senden des kodierten Videosignals und des Synchronisierungsreferenzsignals umfasst.

5. Sender nach Anspruch 4, bei dem das Synchronisierungsreferenzsignal ein Kennzeichnungsbit bzw. ein Flag umfasst, das den Beginn des Videovollbilds anzeigt.

6. Sender nach Anspruch 4, bei dem das Mittel zum Detektieren des Synchronisierungsreferenzsignals ein Streifen- und Zeilenbild-/Vollbild-Synchronisationswort umfasst.

**Revendications**

1. Procédé de synchronisation d'un décodeur de signal vidéo ayant un tampon de décodeur, comprenant les étapes de codage d'un signal vidéo numérique pour une transmission dans un codeur ayant un tampon de codeur, de génération d'un signal de référence de temporisation explicite, d'insertion du signal de référence de temporisation dans le signal vidéo codé après le tampon de codeur et avant la transmission, de transmission du signal vidéo comprenant le signal de référence de temporisation, de réception du signal vidéo sur un récepteur, de détection du signal de référence de temporisation dans le signal vidéo codé reçu avant le tampon de décodeur, et de réglage d'une base de temps de décodeur selon le signal de référence de temporisation détecté.

2. Récepteur de signal vidéo comprenant un moyen pour recevoir un signal vidéo numérique codé transmis comprenant un signal de référence de temporisation explicite, un décodeur pour décoder le signal vidéo codé comprenant un tampon de décodeur, un moyen pour détecter le signal de référence de temporisation dans le signal vidéo reçu avant le tampon de décodeur, un moyen pour régler la base de temps du décodeur selon le signal de référence de temporisation détecté, un moyen pour afficher le signal vidéo décodé.

3. Récepteur selon la revendication 2, dans lequel le moyen pour détecter le signal de référence de temporisation dans le signal vidéo reçu comprend un moyen pour extraire une référence de temporisation du signal vidéo avant le tampon de décodeur.

4. Émetteur de signal vidéo comprenant une source de signal vidéo numérique, un codeur pour coder le signal vidéo à émettre, le codeur comprenant un tampon de codeur, un moyen pour générer un signal de référence de temporisation explicite, un moyen pour insérer le signal de référence de temporisation dans le signal vidéo codé au départ du tampon de codeur, et un moyen pour émettre le signal vidéo codé et le signal de référence de temporisation.

5. Émetteur selon la revendication 4, dans lequel le signal de référence de temporisation comprend un indicateur indiquant le début de la trame vidéo.

6. Émetteur selon la revendication 4, dans lequel le moyen pour détecter le signal de référence de temporisation comprend un mot de synchronisation de bande et d'image/trame.

*Fig.1*

*Fig.2*

*Fig.3*